**Europäisches Patentamt**

**European Patent Office**

**Office européen des brevets**

(19)

(11) Veröffentlichungsnummer : **0 364 907 B1**

(12)

# EUROPÄISCHE PATENTSCHRIFT

(45) Veröffentlichungstag der Patentschrift :
**20.05.92 Patentblatt 92/21**

(51) Int. Cl.$^5$ : **G01B 11/24**

(21) Anmeldenummer : **89119108.2**

(22) Anmeldetag : **14.10.89**

(54) **Verfahren und Vorrichtung zum Bestimmen der Geometrie eines Körpers.**

(30) Priorität : **18.10.88 DE 3835417**

(43) Veröffentlichungstag der Anmeldung :
**25.04.90 Patentblatt 90/17**

(45) Bekanntmachung des Hinweises auf die
Patenterteilung :
**20.05.92 Patentblatt 92/21**

(84) Benannte Vertragsstaaten :
**AT CH DE ES FR GB IT LI SE**

(56) Entgegenhaltungen :
**DE-A- 2 725 756**
**DE-A- 2 729 576**
**FR-A- 2 588 654**
**US-A- 3 749 500**
**US-A- 4 264 208**

(73) Patentinhaber : **SMS Hasenclever GmbH**
**Witzelstrasse 55**
**W-4000 Düsseldorf 1 (DE)**

(72) Erfinder : **Biswas, Amit Kumar, Dr.**
**Im Bienefeldskamp 5**
**W-4044 Kaarst 1 (DE)**
Erfinder : **Nieschwitz, Paul-Josef, Dr.**
**Reinhold-Klügel-Hof 35**
**W-5140 Erkelenz (DE)**
Erfinder : **Schubert, Hans-Albert**
**Nixenstrasse 65**
**W-4000 Düsseldorf (DE)**

(74) Vertreter : **Pollmeier, Felix et al**
**Patentanwälte**
**HEMMERICH-MÜLLER-GROSSE-**
**POLLMEIER-MEY-VALENTIN**
**Eduard-Schloemann-Strasse 47**
**W-4000 Düsseldorf 1 (DE)**

Jouve, 18, rue Saint-Denis, 75001 PARIS

## Beschreibung

Die Erfindung betrifft ein Verfahren und eine Vorrichtung zum Bestimmen der Geometrie eines metallischen Werkstücks in einer Schmiedepresse für einen Bearbeitungsdurchlauf, wobei das Werkstück in der Schmiedepresse zur Bearbeitung in seiner Längsrichtung schrittweise vorgeschoben und in vorbestimmter Weise um seine Längsachse gedreht wird.

Durch die DE-A- 2 729 576 ist eine Meßvorrichtung zur Umfangsmessung von in Richtung seiner Längsachse bewegten, strangförmigen Gutes, insbesondere eines elektrischen Kabels, bekanntgeworden, bei der eine Strahlenquelle das zu messende Gut auf eine aus zahlreichen elektrischen Strahlungssensoren aufgebaute Matrix projeziert. Durch Rotation der Meßvorrichtung um das strangförmige Gut läßt sich dessen geometrische Form ermitteln, wozu während der Rotation in regelmäßigen Intervallen die Anzahl der abgeschalteten Sensoren mittels einer elektronischen Zähleinrichtung gezählt wird.

Bei einem aus der US-A- 4 264 208 bekannten Meßverfahren wird die Oberfläche eines stranggepreßten, langgestreckten Werkstückes mittels Laserstrahlen abgetastet, um mittels der erreichten Meßwerte die Fertigung zu steuern. Zu diesem Zweck werden die Meßsignale in einen elektronischen Rechner gegeben, der einen Soll- Ist- Wert- Vergleich vornimmt.

Aus der DE-A-3 723 825 ist ein Verfahren zum Recken eines metallischen Werkstückes in einer Schmiedepresse bekannt. Das Werkstück wird dort vor der jeweiligen Reckung oder dem Biß zwischen dem Obersattel und dem Untersattel der Schmiedepresse in Werkstück- Streckrichtung unter Einbeziehung der während der Verformung gemessenen Längung des Werkstückes jeweils nur soweit versetzt, daß der Bißrand des jeweils vorhergehenden Bisses am Werkstück innerhalb der Sattelränder zu liegen kommt. Zur Messung der Längung des Werkstückes wird dabei ein Reckgradmesser verwendet, der über ein am freien Ende des Werkstückes lösbar angeordnetes Meßseil mit dem Werkstück verbunden ist. Das bekannte Verfahren mit der dazugehörigen Vorrichtung hat den Nachteil, daß lediglich die Längung eines Werkstückes während des Bearbeitungsvorganges über eine Prozeßsteuerung mit Prozeßrechner berücksichtigt werden kann, wahrend die wichtige Querschnittsveränderung ' eines bearbeiteten Werkstückes bei der Prozeßsteuerung nicht einbezogen wird.

Weiterhin sind herkömmliche Meßverfahren bekannt, bei denen der Querschnitt eines Werkstückes am vermeintlichen Ende des Bearbeitungsprozesses mit einer Meßzange gemessen wird. Abgesehen von der Ungenauigkeit eines solchen Meßverfahrens, eignet sich dieses Meßverfahren nicht für eine Prozeßsteuerung eines Bearbeitungsvorganges und auch nicht für schwer zugängliche Werkstücke.

Darüberhinaus sind aus der DE-A-3 414 500 ein Verfahren sowie eine Vorrichtung zur Meßung der Profile von ungleichmäßigen Objekten bekannt, wobei das Profil des Materials durch eine optische Meßstrecke hindurchgeführt wird, die um das den Lichtstrahl der Meßstrecke zumindest teilweise unterbrechende Material rotiert. Durch Bestimmung des unterbrochenen Lichtstrahls wird mit Hilfe von geeigneten Mitteln die Profilform ermittelt. Dadurch ist zwar eine entrolle der Profil form sowie die Einhaltung geforderter Spezifikationen möglich, aber ein automatischer Bearbeitungsablauf ist damit nicht steuerbar.

Weiter sind aus der DE-A- 3 219 389 ein optisch- elektrisches Meßverfahren zur Erfassung von unrunden Querschnitten strangartiger Gegenstände und eine Einrichtung zur Durchführung des Verfahrens bekannt, wobei ein Lichtstrahl, der eine Parallelverschiebungsbewegung innerhalb eines Meßfeldes erfährt, von einem im Meßfeld befindlichen Gegenstand dabei für eine bestimmte, von der Größe des Querschnitts in der Abtastrichtung abhängige, meßbare Zeit abgeschaltet wird. Bei unveränderlicher Orientierung des Querschnitts des zu untersuchenden Gegenstandes bezogen auf die Umgebung erfolgt die Abtastung in mehreren unterschiedlichen Richtungen entweder durch Verschwenken des gesamten Meßsystems um eine zur Längsachse des Gegenstandes parallele Achse oder durch einsammeln von Meßwerten mittels mehrerer unterschiedlich ausgerichteter Meßsysteme, die dann stillstehen. Das bekannte Meßverfahren erfaßt zwar unrunde Querschnitte, aber für die Berücksichtigung bei der Steuerung eines Bearbeitungsablaufes ist es nicht geeignet.

Der Erfindung liegt daher die Aufgabe zugrunde, ein Verfahren und eine Vorrichtung zum Bestimmen der Geometrie eines Werkstückes in einer Schmiedepresse zu schaffen, mit denen in einfacher Weise der Querschnitt des Werkstückes erfaßt und bei der vollautomatischen Prozeßsteuerung eines Bearbeitungsvorganges berücksichtigt werden kann.

Diese Aufgabe wird erfindungsgemäß dadurch gelöst, daß aus einer vorangegangenen ersten Meßung oder von einem vorangegangenen Bearbeitungsdurchlauf bekannten, durch das Abtasten des Umfanges des Werkstückes und Berechnen von Querschnitten über die Länge gegebenen Geometrie des einlaufenden Werkstückes aus dem Verhältnis des eingelaufenen Querschnitts zu dem/den auslaufenden Queschnitt/Querschnitten, aus der jeweiligen Ausgangslänge die Länge nach dem jeweiligen Durchgang unter Volumenkonstanzbedingung errechnet wird, indem aus dem Produkt von jeweils eingelaufenem Querschnitt une zugehörigem Werkstückvorschub durch Division mit dem ermittelten auslaufenden Querschnitt die aktuelle Länge bestimmt wird, und daß die über die auslaufende Länge gegebene Geometrie ermittelt wird, indem in den

2

Abständen der Querschnittsmessungen deren aktuelle Ergebnisse des Abschnitten der aktuellen Länge zugeordnet und in einem Rechner so umgesetzt werden, daß die aktuelle Geometrie erfaßt wird.

Nach einem Vorschlag der Erfindung wird die jeweils erfaßte, aktuelle Geometrie des Werkstückes im Rechner so verarbeitet, daß ein folgender Umformschritt mit vorbestimmten programmierten Schmiedeparametern eingeleitet wird. Bei diesem Verfahren ist besonders vorteilhaft, daß die aktuelle Geometrie des Werkstücks laufend erfaßt wird, so daß diese Stellgröße bei der automatischen Prozeßsteuerung eines Bearbeitungsvorganges stetig einbezogen werden kann. Dadurch läßt sich der vollautomatische Bearbeitungsprozeß eines Werkstückes so optimal steuern, daß die bearbeiteten Werkstücke am Ende des Bearbeitungsprozesses höchsten Qualitätsanforderungen hinsichtlich Bearbeitung und Maßgenauigkeit genügen.

Für die Vorrichtung wird die Aufgabe erfindungsgemäß dadurch gelöst, daß in der Nähe des Bearbeitungsbereiches des Werkstückes ein Träger angeodnet ist, daß der Träger um das Werkstück mit einer difinierten Geschwindigkeit rotierend angebracht ist, und daß an der Innenfläche des Trägers verteilt an zwei oder mehreren Stellen jeweils benachbart angeordnete Strahl- Sender und Strahl- Empfänger installiert sind. Das kontinuierliche Messen läßt sich dabei besonders betriebssicher und störunanfälling mittels als Laservorrichtungen ausgebildeter Strahl- Sender und Strahl- Empfänger erreichen, die an der Innenfläche des Trägers angebracht sind, der vorteilhafterweise als Ring ausgebildet und verfahrbar oder schwenkbar and einem Aufnehmer angeordnet ist. Darüberhinaus ist der Ring mit einer Kühleinrichtung für Strahl- Sender und Strahl- Empfänger ausgerüstet. Durch das berührungslose Meßsystem wird erreicht, daß besonders betriebssicher und völlig verschleißfrei gearbeitet werden kann, wobei mit äusserst geringen Meßzeiten höchste Meßgenauigkeiten erzielt werden.

Die Zeichnungen von Ausführungsbeispielen und ein Flußdiagramm dienen der weiteren Erläuterung der Erfindung. Es zeigen die

Figur 1 und

Figur 2 Ausführungsbeispiele von Meßvorrichtungen und die

Figur 3 ein weiteres Ausführungsbeispiel einer Meßvorrichtung in Zuordnung zu einer Schmiedepresse, und ergänzend hierzu die

Figur 4 einen Ausschnitt einer Seitenansicht in größerem Maßstab teils im Schnitt.

Figur 5 zeigt ein Flußdiagramm.

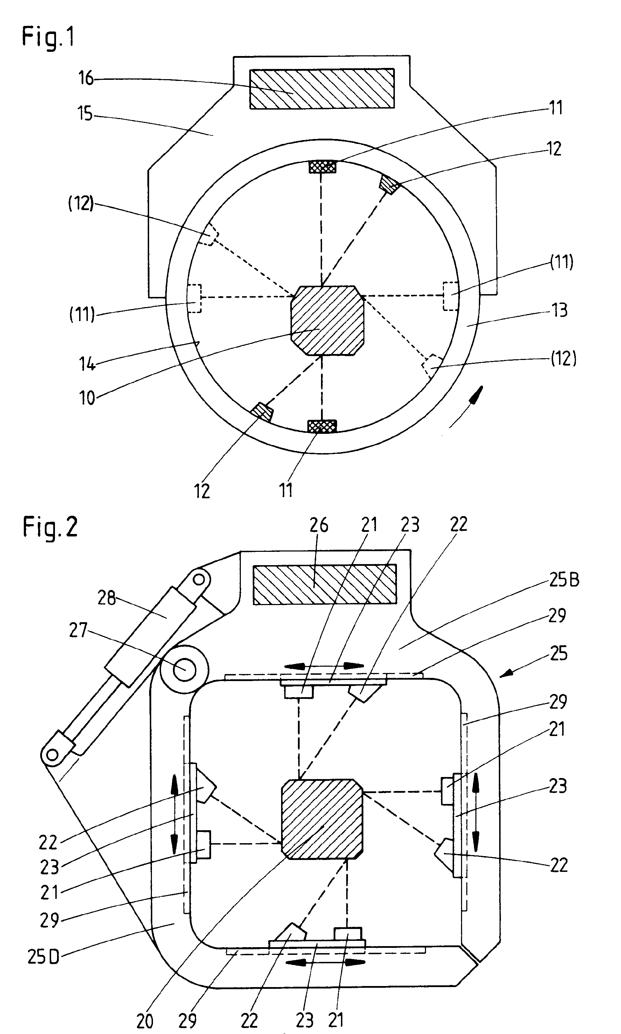

Bei dem in der Fig. 1 dargestellten Ausführungsbeispiel ist ein als Ring 13 ausgebildeter Träger um ein Werkstück 10 angeordnet. Dabei ist es nicht erforderlich, daß das Werkstück 10 mittig angeordnet ist, sondern es kann vielmehr auch eine exzentrische Lage einnehmen. An zwei oder (wie in der Fig. 1 punktiert dargestellt ist) mehreren gleichmäßig verteilt liegenden Stellen an der Innenfläche 14 des Ringes 13 sind jeweils benachbart angeordnete Strahl-Sender 11 und Strahl-Empfänger 12 installiert. Dabei sind die Strahl-Sender 11 und Strahl-Empfänger 12 vorteilhafterweise als Laservorrichtungen ausgebildet. Die Laservorrichtungen bestehen im wesentlichen aus einer Laserkanone, die den Laserstrahl emittiert, der an der Auftreffstelle der Oberfläche des Körpers 10 gebrochen und auf den Laser-Empfänger zurückgeworfen wird.

Der Ring 13 ist um das Werkstück 10 mit einer definierten Geschwindigkeit in Pfeilrichtung rotierend angebracht. Dazu ist der Ring 13 an einem Aufnehmer 15 angeordnet, der verfahrbar oder schwenkbar an einem Tragbalken 16 einer ansonsten nicht dargestellten Einrichtung befestigt ist.

Da die Meßvorrichtung in einer Umgebung mit hohen Temperaturen und hoher Wärmestrahlung durch das glühende Schmiedestück arbeitet, ist es vorteilhaft den Ring 13 mit einer Kühlvorrichtung auszurüsten, durch die der Ring 13 selbst und die Strahl-Sender 11 und die Strahl-Empfänger 12 gekühlt sind. Dabei kann die Kühleinrichtung mit einem Kühlmedium beaufschlagt sein, das vorzugsweise aus Druckluft oder Wasser besteht.

Die an sich vorteilhafte Verwendung eines einfachen geschlossenen Ringes als Träger von Strahl-Sendern und Strahl-Empfängern, wie dies im Ausführungsbeispiel nach Fig. 1 mit dem Ring 13 vorgesehen ist, ist mit dem Nachteil behaftet, daß die Meßvorrichtung nicht ohne weiteres entfernt werden kann, somit längere Zeit oder ständig der Wärmestrahlung ausgesetzt ist. Bei dem Ausführungsbeispiel nach der Fig. 2 ist daher ein Aufnehmer 25 vorgesehen, der aus einem an einem Tragbalken 26 befestigten Basisteil 25B und einem schwenkbar an diesem befestigten Deckelteil 25D besteht. Verbund sind das Basisteil 25B und das Deckelteil 25D über einen Bolzen 27, um den das Deckelteil 25D mittels einer Kolben-Zylinder-Einheit 28 geschwenkt werden kann. In dem Aufnehmer 25 sind Schlitten 23 als Träger von Strahl-Sendern 21 und Strahl-Empfängern 22 angeordnet, die in Führungen 29 translatorisch zu den vier Rahmenteilen hin und her gehend beweglich sind. Bei geöffnetem Deckelteil 25D kann die gesamte Meßvorrichtung aus dem Bereich belastender Wärmestrahlung ausgebracht werden, obgleich sich das Werkstück 20 noch in Schmiedeposition befindet.

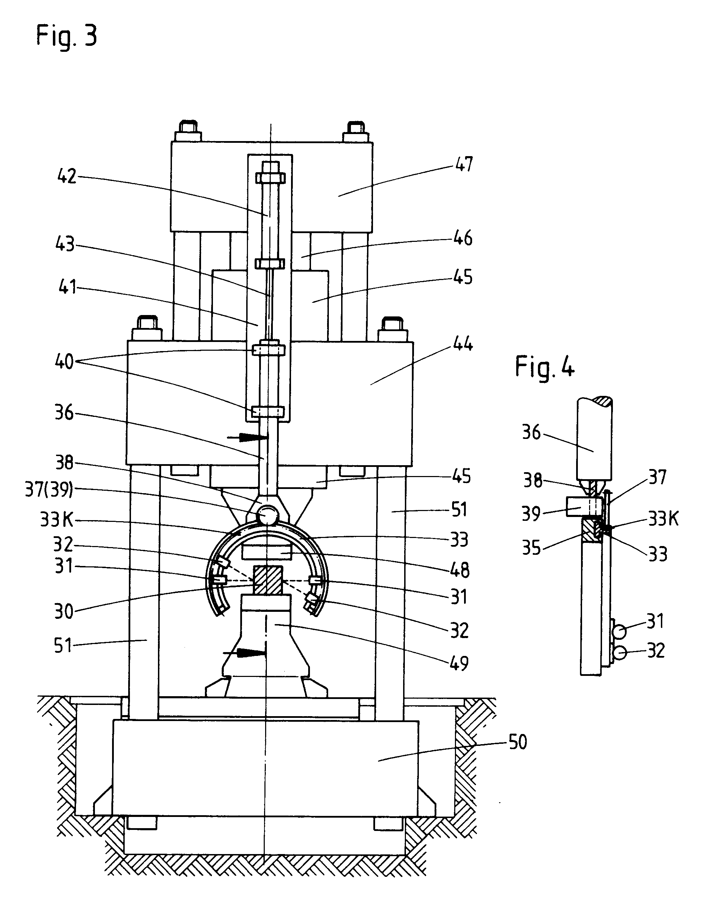

Ein weiteres Ausführungsbeispiel einer aus dem Bereich belastender Wärmestrahlung ausbringbaren Meßvorrichtung zeigen die Fig. 3 und 4, die zugleich die Zuordnung der Meßvorrichtung zu einer Schmiedepresse zeigen. Als Träger von zwei Strahl-Sendern 31 und zwei Strahl-Empfängern 32 ist hier ein Ringsektor 33 vorgesehen, der das Werkstück 30 nicht voll sondern nur zu etwa 240° bis 270° umschließt. Dieser Ringsektor 33 ist in einem Aufnehmer 35 drehbar gelagert, der das Werkstück 30 ebenso wie der Ringsektor 33 nicht voll umschließt.Der Ringsektor 33 ist mit einem aus seiner Lagerung im Aufnehmer 35 vorstehenden Kranz 33K versehen, der eine Außenverzahnung aufweist, in die ein Zahnrad 37 eingreift. Getragen ist der Aufnehmer 35 von einem Gestänge 36, welches über eine Kopfplatte 38 mit dem Aufnehmer 35 verbunden ist. An der Kopfplatte 38 befestigt ist ein Getriebemotor 39, dessen Abtriebswelle das Zahnrad 37 trägt, so daß über den Getriebemotor 39, das Zahnrad 37 und den Zahnkranz 33K der Ringsektor 33 im Aufnehmer 35 gedreht werden kann. Die zu einem Meßvorgang erforderliche Drehung erfolgt insbesondere aus der in Fig. 3 dargestellten Ausgangsstellung heraus um jeweils 90° in beiden entgegengesetzten Richtungen, so daß das Werkstück 30 bei einem Meßvorgang auf seinem gesamten Umfang abgetastet wird. Das den Aufnehmer 35 mit dem Ringsektor 33, den Strahl-Sendern 31 und den Strahl-Empfängern 32 tragende Gestänge 36 ist in Führungsstücken 40 drehfest aber längsverschiebbar geführt. Die Führungsstücke 40 sind Bestandteil einer Tragplatte 41, die auch eine Kolben-Zylinder-Einheit 42 trägt, deren Kolbenstange 43 mit dem Gestänge 36 verbunden ist. Mit der Tragplatte 41 ist die Meßvorrichtung am oberen festen Joch 44 einer Schmiedepresse befestigt. Die Schmiedepresse im Ausführungsbeispiel ist eine Laufzylinderpresse, d.h. eine Presse, die in ihrem oberen Joch 44 einen Laufzylinder 45 führt, dessen Kolben 46 sich an einem Brückenstück 47 abstützt und der ein oberes Werkzeug 48 trägt, das mit einem unteren Werkzeug 49 zusammenwirkt. Das untere Werkzeug 49 ist auf einem unteren Joch 50 befestigt, welches über Säulen 51 mit dem oberen Joch 43 den Pressenrahmen bildet.

Es empfiehlt sich, an beiden Seiten der Schmiedepresse je eine Meßvorrichtung anzubringen, so daß der einlaufende Querschnitt $A_M$ und der auslaufende Querschnitt $A_{M+1}$ gemessen werden kann. Von besonderer Bedeutung ist die Anordnung von zwei Meßvorrichtungen zu beiden Seiten der Presse, wenn diese mit zwei Manipulatoren zusammenarbeitet und das Werkstück in beiden Durchlaufrichtungen bearbeitet, wobei dann die Meßvorrichtungen entsprechend der Durchlaufrichtung abwechselnd den einlaufenden Querschnitt $A_M$ und den auslaufenden Querschnitt $A_{M+1}$ messen.

Aus der zeitlichen Folge des Aussendens und Empfangens der Laserstrahlen in Verbindung mit der Erfassung der jeweiligen Dreh- oder Verschiebestellung der Sender und Empfänger wird die Kontur und aus dieser durch Planimetrierung die Größe (Flächeninhalt) des vermessenen Querschnitts in einer ersten Rechenstufe ermittelt. Das Ergebnis einer hinter der Presse an dem soeben verformten Werkstück vorgenommenen Messung wird in einer zweiten Rechenstufe in Beziehung zu einer Messung gesetzt, die vor dem Verformungsschritt durchgeführt wurde und unmittelbar aus einem Meßergebnis abgeleitet oder aus einem Speicher vorausgegangener Meßergebnisse entnommen wird. In Verbindung mit der Ausgangslänge, die sich aus der ersten auf das Schmiedewerkzeug aufgelegten Länge ($l_x$) und der Summe der Manipulatorvorschübe ($S_{m1}$ bis $S_{mn}$) des Schmiedevorgangs ergibt und in einem die Prozeßdaten verarbeitenden Rechner ermittelt wird, wird aus dem Verhältnis der Querschnitte die neue aktuelle Länge des Werkstücks in einem auf der Volumenkonstanzbedingung basierenden Programm berechnet. In den Abständen der Querschnittsmessungen werden deren aktuelle Ergebnisse (Querschnittsgröße, Hauptabmessungen, d.h. Höhe, Breite bzw. Durchmesser) den Abschnitten der aktuellen Länge zugeordnet und belegen so die aktuelle Geometrie des Werkstücks, die in einen Datenspeicher aufgenommen und/oder auf einem Bildschirm oder ausgedruckt dokumentiert werden können.

Die Dokumentation der aktuellen Geometrie des Werkstücks ist außer zur Ergebnisüberprüfung geeignet, Basiswerte für nachfolgende Schmiedevorgänge zu liefern, die eingegeben in Rechner der automatischen Prozeßsteuerung dienen können.

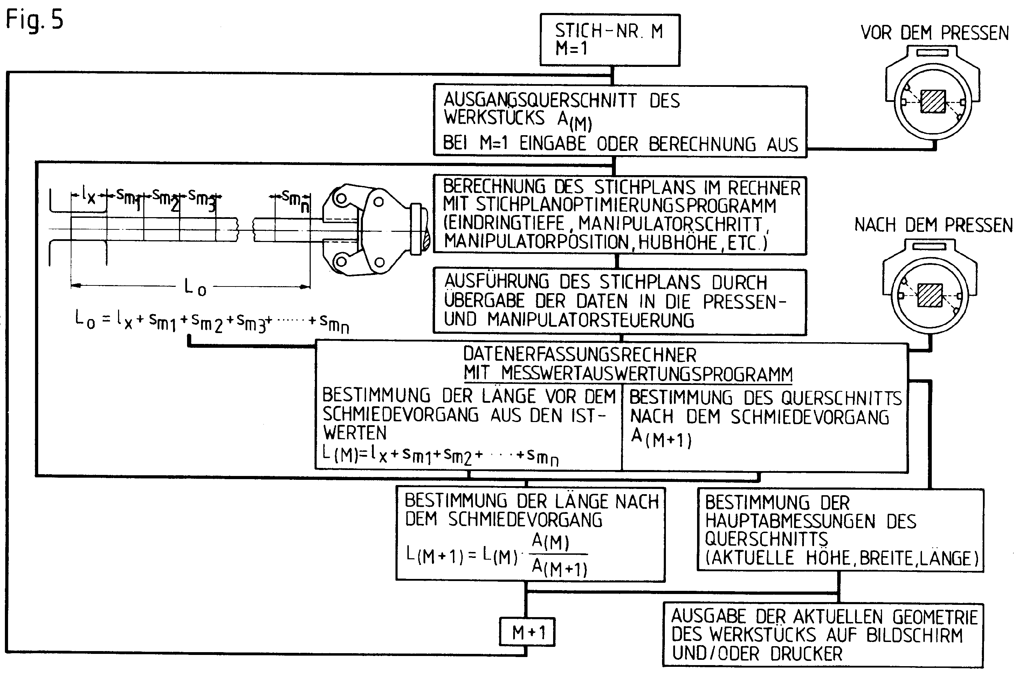

Das Flußdiagramm nach Fig. 5 erläutert den automatisch gesteuerten Prozeßablauf, ausgehend von einem ersten Durchgang des Werkstücks mit dem Stich-Nr. M=1. Auf der Basis des Ausgangsquerschnitts $A_{(M)}$, der für den ersten Stich eingegeben oder durch eine vorlaufende Querschnittsmessung ermittelt wird, erfolgt die Berechnung des Stichplans in einem für Stichplanoptimierung programmierten Rechner. Durch das Stichplanoptimierungsprogramm werden insbesondere die Eindringtiefe des Werkzeugs in das Werkstück, die Größe des Manipulatorschritts und die Manipulatorposition so festgelegt, daß innerhalb mehrere aufeinanderfolgender Schmiededurchgänge eine möglichst gleichmäßige Durchschmiedung des Werkstücks erreicht wird, wie dies aus der erwähnten DE-A- 37 23 825 (Fig. 6) bekannt ist. Die im Stichplan vorgegebenen Daten werden zu dessen Durchführung an die Pressen- und Manipulatorsteuerung übermittelt. Mittels eines Datenerfassungsrechners wird aus den Istwerten der Manipulatorschritte $S_{m1}$ bis $S_{mn}$ zusammen mit dem Wert $l_x$ der Istwert der verformten Ausgangslänge $L_1$ und weiter aus der Querschnittserfassung der Mittelwert der Querschnitte $A_2$ nach der Verformung im ersten Durchgang bestimmt. Aus dem Verhältnis des Querschnitts $A_1$ zum Mittelwert der Querschnitte $A_2$ wird auf der Volumenkonstanzbedingung aus der Ausgangslänge $L_1$ die Länge $L_2$ nach dem ersten Durchgang errechnet.

Zusammen mit den Querschnittsbestimmungen $A_2$ ergibt sich die aktuelle Geometrie des Werkstücks nach dem ersten Durchgang. Diese die Geometrie kennzeichnenden Daten werden als Basisdaten für den nächstfolgenden Durchgang (Stich-Nr. (M+1)) verwendet und können im übrigen über Bildschirm ausgewiesen oder über Drucker dokumentiert werden, wobei die Querschnitte A als Einzelwerte und/oder als Mittelwert angegeben werden können. Da bei jedem Durchlauf von der aktuellen Geometrie ausgegangen wird, ist eine Fehlersummierung aus mehreren Durchläufen ausgeschlossen, mit dem Ergebnis hoher Güte und Maßgenauigkeit. Ferner ist die Möglichkeit gegeben, Abweichungen der Ist-Werte von den der Stichplanberechnung zugrundegelegten Soll-Werten zur Programmkorrektur zu benutzen.

**Patentansprüche**

1. Verfahren zum Bestimmen der Geometrie eines metallischen Werkstückes (10, 20, 30) in einer Schmiedepresse (44 bis 51) für einen Bearbeitungsdurchlauf, wobei das Werkstück (10, 20, 30) in der Schmiedepresse (44 bis 51) zur Bearbeitung in seiner Längsrichtung schrittweise vorgeschoben und in vorbestimmter Weise um seine Längsachse gedreht wird,
dadurch gekennzeichnet,
daß aus einer vorangegangenen ersten Messung oder von einem vorangegangenen Bearbeitungsdurchlauf bekannten, durch das betasten des Umfanges des Werkstücks (10, 20, 30) und Berechnen von Querschnitten ($A_{(M)}$) über die Länge ($L_O$) gegebenen Geometrie des einlaufenden Werkstücks aus dem Verhältnis des eingelaufenen Querschnitts zu dem/den auslaufenden Querschnitt/Querschnitten, aus der jeweiligen Ausgangslänge die Länge wach dem jeweilligen Durchgang unter Volumenkonstanzbedingung errechnet wird, indem aus dem Produkt von jeweil eingelaufenem Querschnitt und zugehörigem Werkstückvorschub durch Division mit dem ermitterlten auslaufenden Querschnitt die aktuelle Länge bestimmt wird, und daß die über die auslaufende Länge gegebene Geometrie ermittelt wird, indem in den Abständen der Querschnittsmessungen deren aktuelle Ergebnisse den

2. Verfahren nach Anspruch 1,
dadurch gekennzeichnet,
daß die jeweilige erfaßte aktuelle Geometrie in einem Rechner so verarbeitet wird, daß ein folgender Umformschritt mit vorbestimmten programmierten Schmiedeparametern eingeleitet wird.

3. Verfahren nach Anspruch 1,
dadurch gekennzeichnet,
daß das Werkstück (10, 20, 30) in zeitlich gleichen Abständen von zwei oder mehr um das Werkstück gleichmäßig verteilten Laserstrahlen aus als Strahlvorrichtungen (11, 21, 31) ausgebildeten Laserkanonen abgetastet wird.

4. Verfahren nach Anspruch 3,
dadurch gekennzeichnet,
daß aus der zeitlichen Folge des Aussendens und Empfangens der Laserstrahlen die Geometrie des Werkstücks (10, 20, 30) über die Kontur seiner Oberfläche erfaßt wird.

5. Verfahren nach Anspruch 4,
dadurch gekennzeichnet,
daß die Kontur der Oberfläche des Werkstücks (10, 20, 30) in einer zentrischen oder exzentrischen Lage abgetastet und die Geometrie des Werkstücks (10, 20, 30) erfaßt wird.

6. Vorrichtung zum Bestimmen der Geometrie eines Werkstücks in einer Schmiedepresse für einen Bearbeitungsdurchlauf, wobei das Werkstück in der Schmiedepresse zur Bearbeitung verschoben und in vorbestimmter Weise um die Längsachse gedreht wird, zur Durchführung eines Verfahrens nach einem der vorhergehenden Ansprüche,
dadurch gekennzeichnet,
daß in der Nähe des Bearbeitungsbereiches des Werkstücks (10, 30) ein Träger angeordnet ist, daß der Träger um das Werkstück (10, 30) mit einer definierten Geschwindigkeit rotierend angebracht ist und daß an der Innenfläche (14) des Trägers an zwei oder mehreren gleichmäßig um das Werkstück verteilten Stellen jeweils benachbart angeordnete Strahl-Sender (11, 31) und Strahl-Empfänger (12, 32) installiert sind.

7. Vorrichtung nach Anspruch 6,
dadurch gekennzeichnet,
daß der Träger als Ring (13) ausgebildet ist, daß der Ring (13) verfahrbar oder schwenkbar an einem Aufnehmer (15) angeordnet ist und daß Strahl-Sender (11) und Strahl-Empfänger (12) als Laservorrichtungen ausgebildet sind.

8. Vorrichtung nach Anspruch 6,
dadurch gekennzeichnet,
daß die Strahl- Sender ( 21 ) und die Strahl- Empfänger (22) von Schlitten (23) getragen werden, die translatorisch tangential zu einem Umkreis des Werkstücks ( 20 ) in Führungen (29) eines zweiteiligen Rahmens (25) bewegbar und die Teile (25B, 25D) des Rahmens (25) durch ein Scharnier ( 27 ) verbunden sind und der Rahmen durch ein Stellmittel (28) zu öffnen und zu schließen ist.

9. Vorrichtung nach Anspruch 6,
dadurch gekennzeichnet,
daß der Träger als Ringsektor (33) ausgebildet ist, der wie der ihn tragende Aufnehmer (35) nach unten geöffnet das Werkstück (30) nur zu 240° bis 270° umschließt, und daß der Aufnehmer (35) mit dem Ringsektor (33) in einer Führung (40) senkrecht beweglich und aus dem Bereich des Werkstücks (30) anhebbar ist.

10. Vorrichtung nach Anspruch 9,
dadurch gekennzeichnet,
daß die Führung (40) am Festteil (44) der Presse befestigt ist.

11. Vorrichtung nach einem der Ansprüche 6 bis 10,
dadurch gekennzeichnet,
daß Kühleinrichtungen zur Kühlung der Strahl- Sender (11, 21, 31 ), der Strahl- Empfänger ( 12, 22, 32 ) und der diese tragenden Bauteile ( 13, 23, 33, 15, 25, 35 ) vorgesehen sind.

## Claims

1. A method of determining the geometry of a metallic workpiece (10, 20, 30) in a forging press (44 to 51) for a processing pass, wherein the workpiece (10, 20, 30) is fed stepwise in its longitudinal direction in the forging press (44 to 51) for processing and is rotated about its longitudinal axis in a predetermined manner, characterised in that the length after the respective pass under volume constancy condition is calculated from a geometry of the entering workpiece known [from a] preceding first measurement or from a preceding processing pass and given by scanning the periphery of the workpiece (10, 20, 30) and calculating cross-section ($A_{(M)}$) over the length ($L_O$), from the ratio of the entered cross-section to the issuing cross-section(s) [and] from the respective starting length, the actual length being determined from the product of entered cross-section and associated workpiece feed throiugh division by the determined issuing cross-section, and in that the geometry given over the issuing length is determined such that in the intervals between the cross-section measurements the actual results of the latter are allocated to the portions of the actual length and are converted in a computer in such a way that the actual geometry is determined.

2. A method according to claim 1,
characterised in that
the respective determined actual geometry is processed in a computer in such a way that a subsequent forming step with predetermined, programmed forging parameters is initiated.

3. A method according to claim 1,
characterised in that
the workpiece (10, 20, 30) is scanned at equal time interval by two or more laser beams uniformly distributed around the workpiece and emitted from laser guns formed as beam devices (11, 21, 31).

4. A method according to claim 3 ,
characterised in that
the geometry of the workpiece (10, 20, 30) over the contour of its surface is determined from the time interval between the emission and reception of the laser beams.

5. A method according to claim 4,
characterised in that
the contour of the surface of the workpiece (10, 20, 30) is scanned in a centric or eccentric position and the geometry of the workpiece (10, 20, 30) is determined.

6. A device for determining the geometry of a workpiece in a froging press for a processing pass, wherein the workpiece is fed in the forging press for processing and is rotated about the longitudinal axis in a predetermined manner, and for carrying out a method according to any one of the preceding claims, characterised in that a support is arranged in the vicinity of the processing region of the workpiece (10, 30), in that the support is mounted so as to rotate around the workpiece (10, 30) at a defined speed, and in that adjacently arranged beam emitters (11, 31) and beam receivers (12, 32) are installed on the inner surface (14) of the support at two or more points uniformly distributed around the workpiece.

7. A device according to claim 6,
characterised in that
the support is formed as a ring (13), in that the ring (13) is arranged so as to be movable or pivotable on a carrier (15) in that the beam emitter (11) and beam receivers (12) are formed as laser devices.

8. A device according to claim 6,
characterised in that
the beam emitters (21) and the beam receivers (22) are carried by slides (23) which are movable in a translatory manner tangentially to a circumcircle of the workpiece (20) in guide (29) of a two-part frame (25), and the part (25B, 25D) of the frame (25) are connected by a hinge (27), and the frame can be opened and closed by a regulating means (28).

9. A device according to claim 6,
characterised in that
the support is formed as an annular sector (33) which, like the carrier (35) carrying it, encloses the workpiece (30) only up to 240° to 270° and is open at the bottom, and in that the carrier (35) with the annular sector (33) is vertically movable in a guide (40) and can be raised out of the region of the workpiece (30).

10. A device according to claim 9,
characterised in that
the guide (40) is mounted on the fixed part (44) of the press.

11. A device according to any one of claim 6 to 10,
characterised in that
cooling installations are provided for cooling the beam emitters (11, 21, 31), the beam receivers (12, 22, 32) and the components (13, 23, 33, 15, 25, 35) carrying them.

12. A device according to claim 11,
characterised in that
the cooling installation is acted upon by compressed air or water.


## Revendications

1. Procédé de détermination de la géométrie d'une pièce métallique (10, 20, 30) dans une presse à forger (44 à 51) pour une opération de travail, la pièce (10, 20, 30) étant avancée progressivement dans la presse (44 à 51) dans la direction de son axe longitudinal pour y être usinée et étant tournée autour de son axe longitudinal d'une manière prédéterminée,
caractérisé en ce que
la longueur après la passe est calculée, à partir de la géométrie de la pièce entrante, connue à partir d'une première mesure antérieure ou d'une opération d'usinage antérieure et donnée par le balayage de la circonférence de la pièce (10, 20, 30) et le calcul des sections ($A_{(M)}$) sur la longueur ($L_O$), à partir du rapport entre la section d'entrée et la ou les sections de sortie, à partir de la longueur de sortie, en prenant pour condition un volume constant, le produit de la section entrante et de l'avance de la pièce étant divisé par la section de sortie mesurée pour donner la longueur de sortie, et en ce que la géométrie existant sur la longueur de sortie est déterminée en établissant une correspondance entre les résultats réels aux intervalles de mesure de la section et les sections de la longueur réelle et en les traitant dans un calculateur pour obtenir la géométrie réelle.

2. Procédé selon la revendication 1,
caractérisé en ce que
la géométrie réelle saisie est traitée dans un calculateur de manière à commander l'opération de formage suivante avec des paramètres de forgeage prédéterminés.

3. Procédé selon la revendication 1,
caractérisé en ce que
la pièce (10, 20, 30) est balayée à intervalles réguliers dans le temps par deux rayons laser ou plus distribués régulièrement autour de la pièce et émis par des canons laser jouant le rôle d'émetteurs de rayons (11, 21, 31).

4. Procédé selon la revendication 3,
caractérisé en ce que
la géométrie de la pièce (1O, 2à, 30) est dérivée su contour de sa surface à partir de la succession dans le temps des émissions et des réceptions de rayons laser.

5. Procédé selon la revendication 4,
caractérisé en ce que
le contour de la surface de la pièce (10, 20, 30) est balayé dans une position centrée ou excenfrée pour déterminer la géométrie de la pièce (10, 20, 30).

6. Dispositif de détermination de la géométrie d'une pièce dans une presse à forger pour une opération de travail, la pièce étant avancée progressivement dans la presse dans la direction de son axe longitudinal pour y être usinée et étant tournée autour de son axe longitudinal d'une manière prédéterminée, pour la mise en oeuvre d'un procédé selon l'une des revendications précédentes,
caractérisé en ce que
l'on installe un support à proximité de la zone d'usinage de la pièce 10, 30), en ce que ce support tourne autour de la pièce (10, 30) à une vitesse définie et en ce que la surface intérieure (14) du support porte en deux endroits ou plus des paires adjacentes composées d'un émetteur de rayons (11, 31) et d'un récepteur de rayons (12, 32).

7. Dispositif selon la revendication 6,
caractérisé en ce que
le support prend la forme d'un anneau (13), en ce que l'anneau (13) est placé de manière à pouvoir se déplacer ou pivoter sur une monture (15) et en ce que les émetteurs de rayons (11) et les récepteurs de rayons (12) sont des dispositifs à laser.

8. Dispositif selon la revendication 6,
caractérisé en ce que
les émetteurs de rayons (21) et les récepteurs de rayons (22) sont portés par des chariots (23) qui peuvent se déplacer tangentiellement à un cercle circonscrivant la pièce (20) dans des glissières (29) d'un cadre (25) en deux parties, en ce que les pièces (25b, 25d) du cadre (25) sont reliées par une articulation (27) et en ce que le cadre peut être ouvert et fermé à l'aide d'un organe de positionnement (28).

9. Dispositif selon la revendication 6,
caractérisé en ce que
le support prend la forme d'un segment annulaire (33) qui, tout comme la monture (35) qui le supporte, est ouvert vers le bas et n'entoure la pièce (30) que sur 240° à 270°, et en ce que la monture (35) peut se déplacer verticalement avec le segment annulaire (33) dans une pièce de guidage (40) pour quitter la zone de la pièce (30).

10. Dispositif selon la revendication 9,
caractérisé en ce que
la pièce de guidage (40) est fixée sur la partie fixe (44) de la presse.

11. Dispositif selon l'une des revendications 6 à 10,
caractérisé en ce qu'il
est prévu des dispositifs de refroidissement pour refroidir les émetteurs de rayons (11, 21, 31), les récepteurs de rayons (12, 22, 32) ainsi que les pièces qui les supportent (13, 23, 33, 15, 25, 35).

12. Dispositif selon la revendication 11,
caractérisé en ce que
le dispositif de refroidissement est parcouru par de l'air comprimé ou de l'eau.

Fig.1

Fig.2

# Fig. 3

42

47

43

46

41

45

40

44

36

38

45

37(39)

51

33K

32

33

31

48

30

31

51

32

49

50

# Fig. 4

36

38

37

39

33K

35

33

31

32

# Fig. 5

STICH-NR. M
M=1

VOR DEM PRESSEN

AUSGANGSQUERSCHNITT DES WERKSTÜCKS $A_{(M)}$
BEI M=1 EINGABE ODER BERECHNUNG AUS

BERECHNUNG DES STICHPLANS IM RECHNER MIT STICHPLANOPTIMIERUNGSPROGRAMM (EINDRINGTIEFE, MANIPULATORSCHRITT, MANIPULATORPOSITION, HUBHÖHE, ETC.)

$$L_0 = l_x + s_{m1} + s_{m2} + s_{m3} + \cdots + s_{mn}$$

AUSFÜHRUNG DES STICHPLANS DURCH ÜBERGABE DER DATEN IN DIE PRESSEN- UND MANIPULATORSTEUERUNG

NACH DEM PRESSEN

DATENERFASSUNGSRECHNER MIT MESSWERTAUSWERTUNGSPROGRAMM

BESTIMMUNG DER LÄNGE VOR DEM SCHMIEDEVORGANG AUS DEN IST-WERTEN
$$L_{(M)} = l_x + s_{m1} + s_{m2} + \cdots + s_{mn}$$

BESTIMMUNG DES QUERSCHNITTS NACH DEM SCHMIEDEVORGANG $A_{(M+1)}$

BESTIMMUNG DER LÄNGE NACH DEM SCHMIEDEVORGANG
$$L_{(M+1)} = L_{(M)} \cdot \frac{A_{(M)}}{A_{(M+1)}}$$

BESTIMMUNG DER HAUPTABMESSUNGEN DES QUERSCHNITTS (AKTUELLE HÖHE, BREITE, LÄNGE)

M+1

AUSGABE DER AKTUELLEN GEOMETRIE DES WERKSTÜCKS AUF BILDSCHIRM UND/ODER DRUCKER

EP 0 364 907 B1